# EUROPÄISCHE PATENTSCHRIFT

(11) **EP 1 404 565 B1**
(45) Veröffentlichungstag und Bekanntmachung des Hinweises auf die Patenterteilung: **07.01.2009**
(21) Anmeldenummer: 01945109.5
(22) Anmeldetag: 10.05.2001
(51) Int. Cl.: B62D 5/04

(54) **VERFAHREN ZUR FUNKTIONSÜBERWACHUNG EINER STEER-BY-WIRE-LENKUNG**
METHOD FOR MONITORING THE OPERATION OF A STEER-BY-WIRE SYSTEM
PROCEDE DE SURVEILLANCE DU FONCTIONNEMENT D'UN SYSTEME DE DIRECTION PAR CABLES

(30) Priorität: 20.09.2000 DE 10046858
(43) Veröffentlichungstag der Anmeldung: 07.04.2004
(73) Patentinhaber: ThyssenKrupp Presta SteerTec GmbH, 40476 Düsseldorf (DE)
(72) Erfinder: SCHÖNTHALER, Jochen, 73269 Hochdorf (DE); HORWATH, Jochen, 72669 Unterensingen (DE); CLEPHAS, Bernd, 73730 Esslingen (DE)
(74) Vertreter: LENZING GERBER
(86) Internationale Anmeldenummer: PCT/EP2001/005329
(87) Internationale Veröffentlichungsnummer: WO 2002/026545

(56) Entgegenhaltungen:
- DE-A- 4 008 106
- DE-A- 19 855 404
- DE-A- 19 859 806
- DE-C- 19 546 733

## Beschreibung

Die vorliegende Erfindung betrifft ein Verfahren mit den Merkmalen des Oberbegriffs des Anspruchs 1 und eine Vorrichtung mit den Merkmalen des Oberbegriffs des Anspruchs 11.

Eine Lenkung, auf die das vorliegende Verfahren anwendbar ist, ist aus der DE 19855404 A1 bekannt. Diese Lenkung umfaßt einen hydraulischen Stellmotor oder Aktuator zur Betätigung einer Kraftfahrzeuglenkung. Der Stellmotor wird über ein Wechselventil wahlweise mit Hydraulikdruck aus insgesamt zwei Hydraulikkreisen beaufschlagt. Der Fahrer betätigt dabei beispielsweise ein Lenkrad, das einen Sollwinkelgeber enthält. Über eine Regelelektronik wird dann ein Steuerventil in Gestalt eines Proportionalventils derart angesteuert, daß der entsprechend in einem Arbeitsraum erzeugte Hydraulikdruck zu einer Radwinkeländerung führt, die letztlich den gewünschten Lenkwinkel erreicht.

Die Funktionsüberwachung dieser Steer-by-wire-Lenkung, bei der kein mechanischer Durchgriff von dem Lenkrad auf den Lenkaktuator besteht, sieht die Überwachung von Einzelkomponenten vor. Hierfür sind bei der bekannten Lenkung zahlreiche Sensoren vorgesehen, die ein Versagen einer einzelnen Komponente eines Hydraulikkreises anzeigen würden. Bei einem Versagen einer Einzelkomponente würde dann über das Wechselventil auf einen zweiten Hydraulikkreis umgeschaltet werden.

In der Praxis ist dieses Verfahren konstruktiv sehr aufwendig, denn es führt dazu, daß eine Vielzahl von Sensoren vorgesehen sein muß, die im übrigen auch redundant ausgelegt sein sollten. Bei dem Überwachungsverfahren ist außerdem von Nachteil, daß bei einem Ausfall eines Sensors vorsorglich ein Fehlersignal ausgelöst werden muß, obwohl der Hydraulikkreis an sich funktionstüchtig ist. In Verbindung mit der großen Anzahl der Sensoren liegt hierin ein Grund für eine größere Fehlerhäufigkeit bei diesen Lenkvorrichtungen.

Es ist deshalb Aufgabe der vorliegenden Erfindung, ein Verfahren und eine Vorrichtung zur Funktionsüberwachung einer Steer-by-wire-Lenkung zu schaffen, die bei geringerem Aufwand an Sensorik eine zuverlässige Fehlererkennung gewährleisten.

Diese Aufgabe wird von einem Verfahren mit den Merkmalen des Anspruchs 1 sowie von einer Vorrichtung, mit den Merkmalen des Anspruchs 11 gelöst.

Weil folgende Schritte vorgesehen sind:
- zur Überwachung der Regelstrecke (Überwachung a)):

- Ermitteln der zeitlichen Veränderung des Istlenkwinkels als Lenkwinkelgeschwindigkeit
- Vergleich der Lenkwinkelgeschwindigkeit und des Arbeitsraumdrucks eines mit Druck beaufschlagten Arbeitsraums mit vorgegebenen Mindestwerten in Abhängigkeit von der Stellgröße und der Fahrzeuggeschwindigkeit
- Ausgabe eines Fehlersignals, falls sowohl die erzielte Lenkwinkelgeschwindigkeit als auch der Arbeitsraumdruck unterhalb der Mindestwerte bleiben,
   wird ein Fehler nur dann generiert, wenn es zu einer tatsächlichen Abweichung des gesamten Systemverhaltens von dem vorgesehenen, sicheren Verhalten kommt. Dieses Verhalten ist in der Praxis für einen sicheren Betrieb relevant und wird zuverlässig überwacht, ohne daß es auf die detaillierte Auswertung der einzelnen Komponenten ankommt.

Eine Überwachung des Reglers und der Regelstrecke sind möglich, wenn folgendes vorgesehen ist:
- Vergleich des Solllenkwinkels mit dem Istlenkwinkel zur Ermittlung einer Regelabweichung
- Ermitteln der zeitlichen Veränderung des Istlenkwinkels als Lenkwinkelgeschwindigkeit
- Vergleich der Lenkwinkelgeschwindigkeit mit vorgegebenen Mindestwerten in Abhängigkeit von der Fahrzeuggeschwindigkeit und der Regelabweichung
- Ausgabe eines Fehlersignals, falls die erzielte Lenkwinkelgeschwindigkeit unterhalb des Mindestwertes (Überwachung b)).

Eine solche Lenkung ist insbesondere für Fahrzeuge mit höherer Fahrgeschwindigkeit geeignet, wenn insgesamt zwei Hydraulikkreise vorgesehen sind, zwischen denen umgeschaltet werden kann; mit der Überwachung a) in Kombination mit der Überwachung b) wird die Regelstrecke insgesamt doppelt mit unabhängigen Auswertealgorithmen überwacht, so dass die Sicherheit besonders groß ist. Bei der Überwachung b) wird zusätzlich der Regler überwacht. Hier kann erkannt werden, wenn der Regler Fehlfunktionen aufweist.

Wenn die Lenkvorrichtung weiter folgendes umfaßt:
- eine fahrerseitig betätigte Lenkhandhabe, z. B. ein Lenkhandrad,
- einen mit gelenkten Fahrzeugrädern zu deren Lenkverstellung zwangsgekoppelten, doppelt wirkenden, ein Gehäuse und zwei Arbeitsräume aufweisenden hydraulischen Stellmotor bzw. Lenkaktuator,
- eine motorisch, insbesondere elektrisch betätigte Steuerventilanordnung, welche über einen Druckanschluss und einen Niederdruckanschluss mit wenigstens einem Hydraulikkreis verbunden ist, der eine Hydraulikpumpe sowie ein Hydraulikreservoir aufweist, wobei die Steuerventilanordnung über zwei Hydraulikleitungen mit den beiden Seiten des Stellmotors verbunden ist und eine Druckdifferenz zwischen den Hydraulikleitungen bezüglich Maß und Richtung zu steuern gestattet, und
- eine elektronische Regelanordnung , welche einen von der Lenkhandhabe betätigten Lenkwinkel-Sollwertgeber sowie einen mit den gelenkten Fahrzeugrädern betätigten Lenkwinkel-Istwertgeber aufweist und die das Servoventil in Abhängigkeit von einem Soll-Istwert-Vergleich regelt,
- Drucksensoren, die den Druck in den Arbeitsräumen erfassen,
ist das Verfahren auf eine hydraulische Servolenkung mit den für einen Kraftfahrzeugbetrieb erforderlichen Funktionen anwendbar.

Wenn zusätzlich vorgesehen ist, das Fehlersignal in einen Fehlerzähler zu speisen, wobei bei Erreichen eines Schwellwertes eine Fehlerreaktion ausgelöst wird, erfolgt die Fehlerreaktion nicht notwendig bei jedem als Fehler gewerteten Ereignis, sondern erst dann, wenn der Schwellwert des Fehlerzählers erreicht oder überschritten wird. Dabei ist vorteilhaft, wenn der Schwellwert variabel und von der Fahrzeuggeschwindigkeit und der Regelabweichung abhängig ist. So kann bei unkritischen Fahrzuständen (Langsamfahrt) oder im Stand vor der Auslösung einer Fehlerreaktion noch einige Überwachungszyklen lang abgewartet werden, ob das zu überwachende System den Fehler möglicherweise ausregelt oder nicht. Bei höherer Fahrgeschwindigkeit, die allgemein hinsichtlich der Lenkung einen kritischen Fahrzustand darstellt, kann die Schwelle zur Auslösung der Fehlerreaktion niedriger sein.

Vorteilhaft ist, wenn bei einer Fehlerreaktion erstens ein Warnsignal erzeugt wird und zweitens auf einen zweiten Hydraulikkreis umgeschaltet wird. So ist der Fahrer darüber informiert, daß das bis dahin aktive Hydrauliksystem nicht in der vorgesehenen Weise reagiert. Weiter ist sichergestellt, daß ein redundantes Hydrauliksystem fortan zur Lenkung des Kraftfahrzeugs verwendet wird.

Wenn die Überwachung a) bei stehendem und fahrendem Fahrzeug zur Erzeugung eines Fehlersignals ausgewertet wird und die Überwachung b) nur bei fahrendem Fahrzeug zur Erzeugung eines Fehlersignals ausgewertet wird, kann in der Überwachung b) auf die Auswertung des Arbeitsdrucks in den Arbeitsräumen verzichtet werden. Die Überwachung im Stand hat geringere Priorität als diejenige bei fahrendem Fahrzeug.

Wenn bei der Überwachung a) die Ausgabe eines Fehlersignals erst dann erfolgt, wenn sowohl die erzielte Lenkwinkelgeschwindigkeit als auch der Arbeitsraumdruck für eine von der Fahrgeschwindigkeit abhängige Zeitdauer unterhalb der Mindestwerte bleiben, kann das Lenksystem beim Auslösen eines Sollsignals zunächst die dem System eigene mechanische Totzeit (Leerweg) überwinden, bis sich eine entsprechende Lenkwinkelgeschwindigkeit oder ein entsprechender Arbeitsraumdruck einstellt. Diese systemimmanente Trägheit führt bei einer zutreffenden Berücksichtigung der Dynamik des Lenksystems dann nicht zu einem Fehlersignal. Gleiches gilt, wenn bei der Überwachung b) die Ausgabe eines Fehlersignals erst dann erfolgt, wenn die erzielte Lenkwinkelgeschwindigkeit für eine von der Regelabweichung abhängige Zeitdauer unterhalb des Mindestwertes bleibt.

Ein Fehlersignal wird sicherheitshalber unmittelbar ausgelöst, wenn die Änderung des Lenkwinkels nicht in Richtung der Verringerung einer Regelabweichung erfolgt. Dies wird vorteilhaft als Fehlerkriterium gewertet, das zur Auslösung einer Fehlerreaktion wie oben beschrieben führt.

Im folgenden wird ein Ausführungsbeispiel des erfindungsgemäßen Überwachungsverfahrens beschrieben.

Eine Steer-by-wire-Lenkung, also eine Lenkung ohne mechanischen Durchgriff vom Lenkrad auf den Stellmotor, für ein schnell fahrendes Kraftfahrzeug weist folgende Komponenten auf:
Ein Lenkrad, das mit einem Lenkwinkel-Sollwertgeber versehen ist;
zwei redundant vorhandene Hydraulikkreise mit je einer Hydraulikpumpe und je einem elektrisch angetriebenen Steuerventil, vorzugsweise in der Bauform eines Proportionalventils;
ein Wechselventil zum Umschalten der beiden Hydraulikkreise;
einen Lenkaktuator in Form eines doppelt wirkenden hydraulischen Stellmotors, der über eine Abtriebswelle in an sich bekannter Weise die Lenkung der gelenkten Räder des Fahrzeugs bewirkt;
einen Lenkwinkel-Istwertgeber, der den Lenkwinkel der gelenkten Räder mittelbar oder unmittelbar detektiert;
zwei Drucksensoren, die unmittelbar den Druck in den Arbeitsräumen des Lenkaktuators messen; sowie
einen Regler, der dem Steuerventil eine Stellgröße in Abhängigkeit von der Regeldifferenz (der Differenz zwischen Sollwinkel und Istwinkel), der Fahrzeuggeschwindigkeit und gegebenenfalls anderen Größen ausprägt.
Weiter ist eine Überwachungsvorrichtung vorgesehen, die sowohl den Sollwinkel als auch den Istwinkel, die Fahrzeuggeschwindigkeit, die Stellgröße und die Drücke in den Arbeitsräumen erfaßt und auswertet.

Die Überwachungsvorrichtung ist dabei dazu eingerichtet, als Fehlerreaktion ein Warnsignal an den Fahrer zu übermitteln sowie das Wechselventil in der Weise umzuschalten, daß ein Hydraulikkreis abgeschaltet und der andere Hydraulikkreis dem Lenkaktuator aufgeschaltet wird.

Im Betrieb nimmt nun die Überwachungsvorrichtung zunächst die Überwachung a) vor. Dabei wird zunächst die Stellgröße erfaßt und in Abhängigkeit von der Stellgröße die vorgesehene Lenkwinkelgeschwindigkeit ermittelt. Liegt die gemessene Lenkwinkelgeschwindigkeit, die aus der zeitlichen Ableitung des Istwinkels der gelenkten Räder zu berechnen ist, unterhalb des als normal vorgesehenen Bereichs, so wird der Druck in dem mit Druck beaufschlagten Arbeitsraum des Lenkaktuators ermittelt. Liegt dieser Druck unterhalb des als normal vorgesehenen Druckbereichs, so wird ein Fehlersignal ausgelöst. Die Messung wird dann wiederholt und gegebenenfalls ein erneutes Fehlersignal ausgelöst, so lange, bis der Schwellwert des Fehlerspeichers für den derzeit vorhandenen Fahrzustand erreicht ist. Sodann wird als Fehlerreaktion ein Warnsignal abgegeben und das Wechselventil schaltet auf den zweiten Hydraulikkreis um. Dabei wird nicht im ersten Überwachungszyklus das volle Erreichen der Lenkwinkelgeschwindigkeit bzw. des Drucks im Arbeitsraum gefordert, sondern vielmehr das dynamische Verhalten des Lenksystems berücksichtigt. In der Praxis wird die sich aufbauende Lenkwinkelgeschwindigkeit bzw. der sich aufbauende Arbeitsdruck in dem zeitlichen Verlauf berücksichtigt.

Bei diesem Vorgehen kann die Überwachungsvorrichtung erkennen, ob beispielsweise die Lenkung derzeit mechanisch blockiert ist, weil beispielsweise das Kraftfahrzeug mit einem gelenkten Rad unmittelbar an einer Bordsteinkante anliegt. In diesem Fall kann wie oben beschrieben die vorgesehene Lenkwinkelgeschwindigkeit nicht dazu führen, daß die Stellgröße unmittelbar in eine Schwenkbewegung der gelenkten Räder umgesetzt wird. Dieses Verhalten stellt allein noch keinen Fehler in der Funktion des Lenksystems dar. Hierbei wird dann das Proportionalventil den vollen Ventilquerschnitt öffnen und den betreffenden Arbeitsraum des Lenkaktuators mit Druck beaufschlagen. Die Überwachung des Arbeitsdrucks in dem Arbeitsraum muß dann zeigen, daß der vorgesehene Arbeitsdruck erreicht wird. So wird die Funktionsfähigkeit der Lenkung anhand des Druckaufbaus in dem Arbeitsraum erkannt, auch wenn die vorgesehene Lenkwinkelgeschwindigkeit nicht erreicht wird und letztlich der Istwinkel nicht den Sollwinkel erreicht. Dieses Verhalten, das in der Praxis mit großer Wahrscheinlichkeit bei Stillstand des Fahrzeugs auftritt, wird von der Überwachung a) sicher erkannt. Die Überwachung a) kann jedoch nicht feststellen, ob der Regler eine falsch berechnete Stellgröße abgibt.

Hierfür ist die Überwachung b) vorgesehen, die zeitgleich oder alternierend mit der Überwachung a) ausgeführt werden kann, jedenfalls bei rollendem Fahrzeug.

Die Überwachung b) ermittelt zunächst die Regelabweichung, also die Differenz zwischen Sollwinkel und Istwinkel. Dann wird die zeitliche Veränderung des Istlenkwinkels als Lenkwinkelgeschwindigkeit ermittelt. Die bei den gegebenen Betriebszuständen (hauptsächlich der Fahrgeschwindigkeit) für die gegebene Regelabweichung vorgesehenen Lenkwinkelgeschwindigkeitswerte werden dann ermittelt und mit der tatsächlichen Lenkwinkelgeschwindigkeit nach Betrag und Richtung verglichen. Dabei wird die Dynamik des Lenksystems berücksichtigt, nach der möglicherweise die vorgesehene Lenkwinkelgeschwindigkeit nur mit einer zeitlichen Verzögerung erreicht werden kann. Wird die vorgesehene Lenkwinkelgeschwindigkeit auch nach Berücksichtigung dieser dynamischen Verzögerung nicht erreicht oder liegt die ermittelte Lenkwinkelgeschwindigkeit nicht in dem als normal angesehenen Bereich, so wird ein Fehlersignal ausgelöst. Ein Fehlersignal wird auch ausgelöst, wenn die Lenkwinkelgeschwindigkeit nicht in eine Richtung weist, die einer Verringerung der Regelabweichung entspricht.

Auf diese Weise wird neben einer Überwachung des Hydrauliksystems auch die Funktionsfähigkeit des Reglers überwacht. Die Messung der Arbeitsdrücke in den Arbeitsräumen des Lenkaktuators ist hierfür nicht erforderlich. Ein Fehler in dem Regler kann beispielsweise dazu führen, daß der Regler schwingt und folglich Stellgrößen erzeugt, die die Regelstrecke zu einer Änderung des Lenkwinkels in die falsche Richtung oder mit der falschen Amplitude veranlaßt. Ein Fehler in dem Regler kann auch dazu führen, daß die Stellgröße falsch berechnet wird. Dies ist unmittelbar daran erkennbar, daß der aufgrund der Stellgröße eingestellte Istlenkwinkel nicht mit dem vom Lenkwinkel-Sollwertgeber erzeugten Solllenkwinkel übereinstimmt. In diesem Falle würde bei vermeintlich ausgeregelter Regelstrecke eine Regelabweichung verbleiben, obwohl die Lenkwinkelgeschwindigkeit zu null wird. Die Fehlerhaftigkeit des Reglers ist damit unmittelbar erkennbar.

Insgesamt wird ein Funktionsüberwachungsverfahren für eine Steer-by-wire-Lenkung geschaffen, das mit geringem Aufwand an Sensorik die wesentlichen Funktionen einer Steer-by-wire-Lenkung zuverlässig überprüft. Dabei kommt es bei der Überprüfung nicht auf die Funktionsfähigkeit der Einzelkomponenten an, sondern darauf, daß das Lenksystem wie vorgesehen funktioniert. Die Überwachung der Regelstrecke durch die Überwachungen a) und b) während der Fahrt ist dabei doppelt und je nach Ausführung unabhängig voneinander ausführbar. Sie kann beispielsweise auch von zwei unabhängig voneinander betriebenen Überwachungsvorrichtungen ausgeführt werden. Die Überwachung b) prüft dabei zusätzlich die Funktionsfähigkeit des Reglers. Die Überwachung b) arbeitet nur bei rollendem Fahrzeug, da bei stehendem Fahrzeug durch äußere Einflüsse Abweichungen von dem vorgesehenen Zusammenhang zwischen Regelabweichung und Lenkwinkelgeschwindigkeit auftreten können.

## Patentansprüche

1. Verfahren zur Überwachung einer Steer-by-wire-Lenkvorrichtung, bei dem im Betrieb folgende Größen ermittelt werden:
- Solllenkwinkel
- Istlenkwinkel
- Stellgröße
- Arbeitsraumdrücke eines ersten und eines zweiten Arbeitsraums
- Fahrzeuggeschwindigkeit, **gekennzeichnet durch folgende Schritte:**
zur Überwachung a) der Regelstrecke :
- Ermitteln der zeitlichen Veränderung des Istlenkwinkels als Lenkwinkelgeschwindigkeit
- Vergleich der Lenkwinkelgeschwindigkeit und des Arbeitsraumdrucks eines mit Druck beaufschlagten Arbeitsraums mit vorgegebenen Mindestwerten in Abhängigkeit von der Stellgröße und der Fahrzeuggeschwindigkeit
- Ausgabe eines Fehlersignals, falls sowohl die erzielte Lenkwinkelgeschwindigkeit als auch der Arbeitsraumdruck unterhalb der Mindestwerte bleiben.

2. Verfahren nach Anspruch 1, **gekennzeichnet durch folgende Schritte:**
zur Überwachung b) des Reglers und der Regelstrecke :
- Vergleich des Solllenkwinkels mit dem Istlenkwinkel zur Ermittlung einer Regelabweichung
- Ermitteln der zeitlichen Veränderung des Istlenkwinkels als Lenkwinkelgeschwindigkeit
- Vergleich der Lenkwinkelgeschwindigkeit mit vorgegebenen Mindestwerten in Abhängigkeit von der Fahrzeuggeschwindigkeit
- Ausgabe eines Fehlersignals, falls die erzielte Lenkwinkelgeschwindigkeit unterhalb des Mindestwertes bleiben.

3. Verfahren nach einem der vorhergehenden Ansprüche, **dadurch gekennzeichnet, dass** zusätzlich vorgesehen ist, das Fehlersignal in einen Fehlerzähler zu speisen, wobei bei Erreichen eines Schwellwertes eine Fehlerreaktion ausgelöst wird.

4. Verfahren nach einem der vorhergehenden Ansprüche, **dadurch gekennzeichnet, dass** der Schwellwert variabel und von der Fahrzeuggeschwindigkeit und/oder der Regelabweichung abhängig ist.

5. Verfahren nach einem der vorhergehenden Ansprüche,
**dadurch gekennzeichnet, dass** bei einer Fehlerreaktion
- ein Warnsignal erzeugt wird, und
- auf einen zweiten Hydraulikkreis umgeschaltet wird.

6. Verfahren nach einem der vorhergehenden Ansprüche,
**dadurch gekennzeichnet, dass** die Überwachung a) bei stehendem und fahrendem Fahrzeug zur Erzeugung eines Fehlersignals ausgewertet wird, und dass die Überwachung b) nur bei fahrendem Fahrzeug zur Erzeugung eines Fehlersignals ausgewertet wird.

7. Verfahren nach einem der vorhergehenden Ansprüche,
**dadurch gekennzeichnet, dass** bei der Überwachung a) die Ausgabe eines Fehlersignals erst dann erfolgt, wenn sowohl die erzielte Lenkwinkelgeschwindigkeit als auch der Arbeitsraumdruck für eine von der Fahrgeschwindigkeit abhängige Zeitdauer unterhalb der Mindestwerte bleiben.

8. Verfahren nach einem der vorhergehenden Ansprüche,
**dadurch gekennzeichnet, dass** bei der Überwachung b) die Ausgabe eines Fehlersignals erst dann erfolgt, wenn die erzielte Lenkwinkelgeschwindigkeit für eine von der Regelabweichung abhängige Zeitdauer unterhalb des Mindestwertes bleibt.

9. Verfahren nach einem der vorhergehenden Ansprüche 7
oder 8, **dadurch gekennzeichnet, dass** nicht im ersten Überwachungszyklus das volle Erreichen der Lenkwinkelgeschwindigkeit bzw. des Drucks im Arbeitsraum gefordert wird, sondern vielmehr das dynamische Verhalten des Lenksystems berücksichtigt wird.

10. Verfahren nach einem der vorhergehenden Ansprüche, **dadurch gekennzeichnet, dass** ein Fehlersignal erzeugt wird, wenn die Änderung des Lenkwinkels nicht in Richtung einer Verringerung der Regelabweichung erfolgt.

11. Lenk vorrichtung zur Durchführung des Verfahrens nach einem der vorhergehenden Ansprüche, wobei die Lenkvorrichtung folgendes umfasst:
- eine fahrerseitig betätigte Lenkhandhabe, z. B. ein Lenkhandrad,
- einen mit gelenkten Fahrzeugrädern zu deren Lenkverstellung zwangsgekoppelten, doppelt wirkenden, ein Gehäuse und zwei Arbeitsräume aufweisenden hydraulischen Stellmotor bzw. Lenkaktuator,
- eine motorisch, insbesondere elektrisch betätigte Steuerventilanordnung, welche über einen Druckanschluss und einen Niederdruckanschluss mit wenigstens einem Hydraulikkreis verbunden ist, der eine Hydraulikpumpe sowie ein Hydraulikreservoir aufweist, wobei die Steuerventilanordnung über zwei Hydraulikleitungen mit den beiden Seiten des Stellmotors verbunden ist und eine Druckdifferenz zwischen den Hydraulikleitungen bezüglich Maß und Richtung zu steuern gestattet, und
- eine elektronische Regelanordnung, welche einen von der Lenkhandhabe betätigten Lenkwinkel-Sollwertgeber sowie einen mit den gelenkten Fahrzeugrädern betätigten Lenkwinkel-Istwertgeber aufweist und die das Servoventil in Abhängigkeit von einem Soll-Istwert-Vergleich regelt,
- Drucksensoren, die den Druck in den Arbeitsräumen erfassen, **dadurch gekennzeichnet, dass**
- Mittel zur Überwachung a) der Regelstrecke
- Mittel zum Ermitteln der zeitlichen Veränderung des Istlenkwinkels als Lenkwinkelgeschwindigkeit,
- Mittel zum Vergleich der Lenkwinkelgeschwindigkeit und des Arbeitsraumdrucks eines mit Druck beaufschlagten Arbeitsraums mit vorgegebenen Mindestwerten in Abhängigkeit von der Stellgröße und der Fahrzeuggeschwindigkeit sowie
- Mittel zur Ausgabe eines Fehlersignals, falls sowohl die erzielte Lenkwinkelgeschwindigkeit als auch der Arbeitsraumdruck unterhalb der Mindestwerte bleiben, vorgesehen sind.

## Claims

1. Method for monitoring a steer by wire steering system, wherein the following variables are determined in service:
- target steering angle
- actual steering angle
- actuating variable
- work space pressures of a first and a second work space
- vehicle speed, **characterized by** the following steps:
for monitoring the control process (a):
- determination of the temporal change of the actual steering angle as the steering angle speed
- comparison of the steering angle speed and the work space pressure of a pressurized work space with preset minimum values dependent on the actuating variable and the vehicle speed
- transmission of an error signal, if both the steering angle speed achieved and the work space pressure remain below the minimum values.

2. Method according to Claim 1, **characterized by** the following steps:
for monitoring the controller and the control process (b):
- comparison of the target steering angle with the actual steering angle to determine a deviation of control
- determination of the temporal change of the actual steering angle as the steering angle speed
- comparison of the steering angle speed with pre-set minimum values dependent on the vehicle speed
- transmission of an error signal, if the steering angle speed achieved remains below the minimum value.

3. Method according to any one of the preceding claims, **characterized in that** provision is also made to feed the error signal to an error counter, wherein an error response is released when a threshold value is reached.

4. Method according to any one of the preceding claims, **characterized in that** the threshold value is variable and is dependent on the vehicle speed and/or the control deviation.

5. Method according to any one of the preceding claims, **characterized in that** in the event of an error response
- a warning signal is produced and
- switch-over to a second hydraulic circuit is made.

6. Method according to any one of the preceding claims, **characterized in that** the case of monitoring a) is evaluated for a stationary and moving vehicle to produce an error signal, and **in that** the case of monitoring b) is only evaluated for a moving vehicle to produce an error signal.

7. Method according to any one of the preceding claims, **characterized in that** in the case of monitoring a) an error signal is only transmitted if both the steering angle speed achieved and the work space pressure, for a period of time dependent on the moving speed, remain below the minimum values.

8. Method according to any one of the preceding claims, **characterized in that** in the case of monitoring b) an error signal is only transmitted if the steering angle speed achieved, for a period of time dependent on the control deviation, remains below the minimum value.

9. Method according to either of the preceding Claims 7 and 8, **characterized in that** total achievement of the steering angle speed or of the pressure in the work space is not required in the first monitoring cycle, but rather the dynamic behaviour of the steering system is considered.

10. Method according to any one of the preceding claims, **characterized in that** an error signal is produced, if the change of the steering angle does not occur towards a reduction in the control deviation.

11. Steering device for executing the method according to any one of the preceding claims, wherein the steering system comprises the following:
- a driver-side operated steering handle, for example a steering hand wheel,
- a double acting hydraulic actuator or steering actuator comprising a housing and two work spaces, forcibly coupled with steered vehicle wheels for their steering adjustment,
- a motorized, in particular solenoid-operated control valve arrangement, which is connected by a pressure connection and a low pressure connection to at least one hydraulic circuit, which has a hydraulic pump as well as a hydraulic reservoir, wherein the control valve arrangement is connected to the two sides of the actuator by two hydraulic lines and allowed to control a pressure differential between the hydraulic lines as regards measurement and direction, and
- an electronic control arrangement which comprises a target steering angle value transducer operated by the steering handle as well as an actual steering angle value transducer operated with the steered vehicle wheels and which controls the servo valve as a function of a comparison between the target and actual values,
- pressure sensors - which detect the pressure in the work spaces, **characterized in that**
- means for monitoring (a) the control process
- means for determining the temporal change of the actual steering angle as the steering angle speed
- means for comparing the steering angle speed and the work space pressure of a pressurized work space with preset minimum values dependent on the actuating variable and the vehicle speed as well as
- means for transmitting an error signal, if both the steering angle speed achieved and the work space pressure remain below the minimum values, are provided.

## Revendications

1. Procédé de surveillance d'un dispositif de direction électrohydraulique du type steer-by-wire, dans lequel les grandeurs suivantes sont déterminées en cours de service :
- angle de direction théorique,
- angle de direction réel,
- grandeur de réglage,
- pressions dans une première et une deuxième chambre de travail,
- vitesse du véhicule,
**caractérisé par** les étapes suivantes :
pour la surveillance a) du système asservi :
- déterminer la variation dans le temps de l'angle de direction réel en tant que vitesse angulaire de direction ;
- comparer la vitesse angulaire de direction et la pression dans une chambre de travail sollicitée en pression avec des valeurs minimales prédéfinies en fonction de la grandeur de réglage et de la vitesse du véhicule ;
- délivrer un signal d'erreur, si la vitesse angulaire de direction obtenue, de même que la pression dans la chambre de travail restent en dessous des valeurs minimales.

2. Procédé selon la revendication 1, **caractérisé par** les étapes suivantes :
pour la surveillance b) du régulateur et du système asservi :
- comparer l'angle de direction théorique avec l'angle de direction réel pour déterminer un déréglage ;
- déterminer la variation dans le temps de l'angle de direction réel en tant que vitesse angulaire de direction ;
- comparer la vitesse angulaire de direction avec des valeurs minimales prédéfinies en fonction de la vitesse du véhicule ;
- délivrer un signal d'erreur, si la vitesse angulaire de direction obtenue reste en dessous de la valeur minimale.

3. Procédé selon l'une quelconque des revendications précédentes, **caractérisé en ce qu'**il est prévu, en plus, de stocker le signal d'erreur dans un compteur d'erreurs, une réaction aux erreurs étant déclenchée lorsqu'une valeur seuil est atteinte.

4. Procédé selon l'une quelconque des revendications précédentes, **caractérisé en ce que** la valeur seuil est variable et dépend de la vitesse du véhicule et/ou du déréglage.

5. Procédé selon l'une quelconque des revendications précédentes, **caractérisé en ce que,** dans le cas d'une réaction aux erreurs,
- un signal d'alarme est délivré et
- il se produit une commutation vers un deuxième circuit hydraulique.

6. Procédé selon l'une quelconque des revendications précédentes, **caractérisé en ce que** la surveillance a) est analysée sur un véhicule à l'arrêt et un véhicule roulant en vue de délivrer un signal d'erreur, et **en ce que** la surveillance b) est analysée uniquement sur un véhicule roulant en vue de délivrer un signal d'erreur.

7. Procédé selon l'une quelconque des revendications précédentes, **caractérisé en ce que,** dans le cas de la surveillance a), un signal d'erreur est délivré uniquement lorsque la vitesse angulaire de direction, de même que la pression dans une chambre de travail restent en dessous des valeurs minimales pendant un intervalle de temps qui dépend de la vitesse de véhicule.

8. Procédé selon l'une quelconque des revendications précédentes, **caractérisé en ce que**, dans le cas de la surveillance b), un signal d'erreur est délivré uniquement lorsque la vitesse angulaire de direction obtenue reste en dessous de la valeur minimale pendant un intervalle de temps qui dépend du déréglage.

9. Procédé selon l'une des revendications précédentes 7 ou 8, **caractérisé en ce qu'**il n'est pas exigé d'atteindre complètement la vitesse angulaire de direction et la pression dans la chambre de travail dans le premier cycle de surveillance, mais au contraire il est prévu de prendre en compte le comportement dynamique du système de direction.

10. Procédé selon l'une quelconque des revendications précédentes, **caractérisé en ce qu'**un signal d'erreur est délivré lorsque la variation de l'angle de direction ne se produit pas dans le sens d'une diminution du déréglage.

11. Dispositif de direction destiné à la mise en oeuvre du procédé selon l'une quelconque des revendications précédentes, ledit dispositif de direction comportant les éléments suivants :
- un manche de direction, tel qu'un volant de direction, actionné par le conducteur ;
- un servomoteur ou actionneur hydraulique à double action, comportant un boîtier et deux chambres de travail et couplé de force avec des roues dirigées du véhicule en vue de leur réglage de direction ;
- un système de vannes de commande, qui est actionné par moteur, en particulier électriquement, et qui est relié par l'intermédiaire d'un raccord de pression et d'un raccord de basse pression à au moins un circuit hydraulique, qui comporte une pompe hydraulique, ainsi qu'un réservoir hydraulique, le système de vannes de commande étant relié via deux conduites hydrauliques avec les deux côtés du servomoteur et permettant de commander une différence de pression entre les conduites hydrauliques en ce qui concerne la valeur et la direction ; et
- un dispositif de réglage électronique, qui comporte un capteur de valeurs de consigne, actionné par le manche de direction, ainsi qu'un capteur de valeurs réelles d'angle de direction, actionné par les roues dirigées du véhicule, et qui régule la servovanne en fonction d'une comparaison entre valeur de consigne et valeur réelle ;
- des capteurs de pression, qui détectent la pression dans les chambres de travail ;
**caractérisé en ce qu'**il est prévu :
- des moyens pour la surveillance a) du système asservi ;
- des moyens pour déterminer la variation dans le temps de l'angle de direction réel en tant que vitesse angulaire de direction ;
- des moyens pour comparer la vitesse angulaire de direction et la pression dans une chambre de travail sollicitée en pression avec des valeurs minimales prédéfinies en fonction de la grandeur de réglage et de la vitesse du véhicule ;
- des moyens pour délivrer un signal d'erreur, si la vitesse angulaire de direction obtenue, de même que la pression dans la chambre de travail restent en dessous des valeurs minimales.
